# FASCICULE DE BREVET EUROPEEN

(11) **EP 1 047 591 B1**
(45) Date de publication et mention de la délivrance du brevet: **19.03.2003**
(21) Numéro de dépôt: 98964553.6
(22) Date de dépôt: 30.12.1998
(51) Int. Cl.: B63C 13/00

(54) **ENGIN COMPRENANT UNE COQUE ET DES ROUES ESCAMOTABLES**
FAHRZEUG MIT EINEM RUMPF UND MIT EINZIEHBAREN RÄDERN
MACHINE COMPRISING A HULL AND RETRACTABLE WHEELS

(30) Priorité: 15.01.1998 FR 9800345
(43) Date de publication de la demande: 02.11.2000
(73) Titulaire: Cofrera, 60550 Verneuil en Halatte (FR)
(72) Inventeur: BOUVART, René, F-78110 Le Vesinet (FR); POSTIC, Jean, F-60300 Apremont (FR)
(74) Mandataire: Le Bras, Hervé
(86) Numéro de dépôt international: FR9802917
(87) Numéro de publication internationale: WO99036311

(56) Documents cités:
- FR-A- 2 182 773
- GB-A- 798 956
- US-A- 3 608 111
- US-A- 3 689 950

## Description

L'invention est relative à un engin comprenant une coque susceptible de flotter sur un plan d'eau et d'être tractée par un véhicule.

On connaît le développement des loisirs nautiques qui conduit le plus souvent les plaisanciers à transporter leur bateau sur leur lieu de navigation, le seul moyen proposé commercialement étant à ce jour l'utilisation de remorques porte-bateau spécialement conçues pour cela; en plus de leur coût ces remorques présentent certains inconvénients d'utilisation tels que leur poids et leur encombrement pour les ranger quand l'embarcation a été mise à l'eau.

L'invention entend y remédier en proposant un engin équipé de roues qui restent en permanence solidaires de l'engin et peuvent ainsi être utilisées à tout moment, tant pour le transporter que pour le mettre à l'eau ou l'en sortir. De nombreuses solutions ont déjà été étudiées mais elles ont jusqu'à présent achoppé sur des problèmes de performances ou d'industrialisation : mauvais comportement routier, altération des qualités de navigation, poids et coût élevés pour régler de façon satisfaisante les aspects mécaniques et les problèmes d'étanchéité et de corrosion, l'obstacle majeur étant de trouver un moyen de suspension qui puisse être manoeuvré dans l'eau sans recourir à des solutions sophistiquées.

US 3 689 950 représente l'état de la technique le plus proche de la présente invention. Ce document montre, en effet, un engin comportant une coque susceptible de flotter sur un plan d'eau et équipée à demeure d'un essieu transversal rigide présentant à ses extrémités des bras de suspension sensiblement parallèles sur lesquels sont montés des roues ayant des axes de rotation excentrés par rapport à l'axe défini par l'essieu, lesdits bras étant montés de manière oscillante sur l'essieu, et ledit essieu étant monté de manière rotative sur ladite coque pour pouvoir pivoter entre deux positons extrêmes, une première position, dite de roulage, dans laquelle les bras s'étendent vers le bas afin de permettre le roulage de l'engin sur le sol et une deuxième position, dite de navigation, dans laquelle les bras sont relevés et logent avec leurs roues dans des cavités ménagées dans la coque, des moyens étant prévus pour manoeuvrer et immobiliser l'essieu dans l'une ou l'autre desdites positions.

Dans ce document, l'essieu traverse la coque, ce qui pose des problèmes inévitables d'étanchéité.

Le but de l'invention est de pallier ces difficultés.

L'invention atteint son but par le fait que l'essieu est monté dans un évidement ménagé sous la coque et maintenu au moyen de deux paliers non étanches, et l'essieu est équipé d'un bras de levier pour permettre son pivotement.

Cet évidement est en communication avec l'eau sur laquelle l'engin flotte en mode navigation.

Pour favoriser l'écoulement de l'eau sous la coque, l'évidement peut être obturé par une pièce complémentaire.

De préférence, les bras sont montés de manière oscillante sur l'essieu avec interposition d'amortisseur en caoutchouc.

L'ensemble essieu, bras de suspension à amortisseurs en caoutchouc et roues est d'un type couramment utilisé pour assurer la suspension des remorques légères, modifié dans la présente invention pour le protéger contre la corrosion et pouvoir le faire pivoter par rapport à la coque afin de remonter d'un seul mouvement les deux roues dans la coque avec un mécanisme simple et fiable.

Selon un premier mode de réalisation, le bras de levier est actionnable manuellement. Il peut être rendu accessible par un puits ménagé dans la coque. Des moyens, de type goupille, coopérant avec la coque et le bras de levier, sont dans ce cas prévus pour immobiliser ce dernier ainsi que l'essieu dans la position de roulage ou la position de navigation.

Selon un deuxième mode de réalisation, il est prévu un mécanisme pour faire pivoter l'essieu. Ce mécanisme comprend avantageusement une vis sans fin montée rotative sur la coque à l'aide de paliers, un écrou susceptible de se déplacer dans une cage ouverte sur ladite vis par rotation de cette dernière, une bielle articulée sur l'écrou et sur l'extrémité libre du bras de levier, et des moyens pour faire tourner la vis, qui peuvent être notamment constitués d'une manivelle prévue à une extrémité de la vis. Ce mécanisme est monté sur la coque de telle manière que dans la position de roulage, la bielle soit sensiblement perpendiculaire à la vis, afin d'assurer un autoblocage de l'ensemble.

Les avantageuses dispositions suivantes sont en outre de préférence adoptées :
- en mode navigation des volets mobiles permettent de fermer les ouvertures pratiquées dans la coque pour laisser passer les roues afin de préserver les performances de la carène.
- l'engin a une carène de type catamaran permettant d'accueillir les roues dans les coques latérales quand elles sont remontées.
- pour pouvoir tracter ou déplacer l'engin à terre, celui-ci est équipé d'un timon démontable.

L'invention sera mieux comprise, et des caractéristiques secondaires et leurs avantages apparaîtront au cours de la description de réalisation donnée ci-dessous à titre d'exemple.

Il est entendu que la description et les dessins ne sont donnés qu'à titre indicatif et non limitatif.

Il sera fait référence aux dessins annexés, dans lesquels :

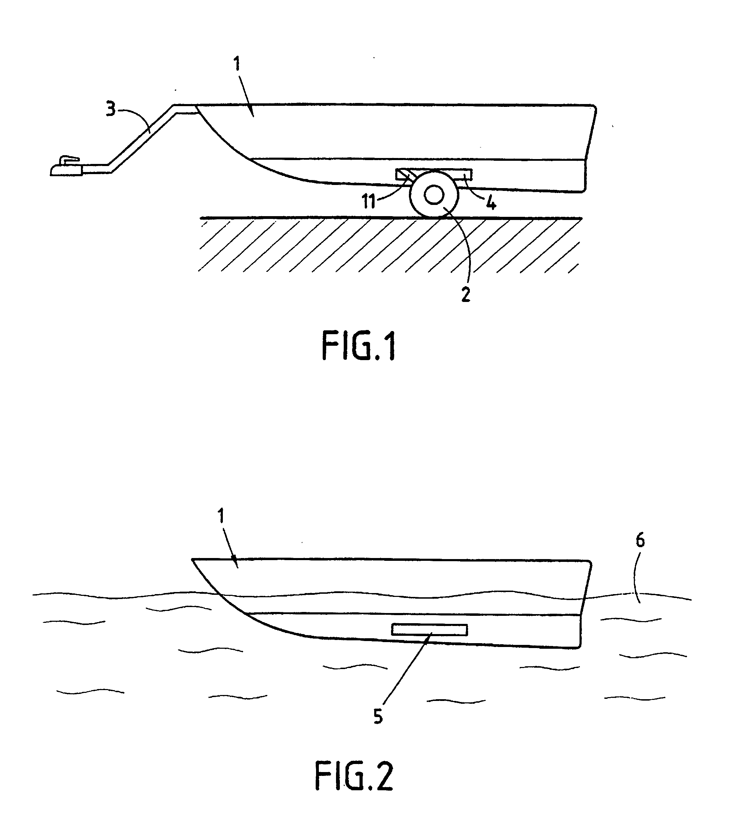

- la figure 1 montre l'engin selon l'invention constitué d'une coque, de roues escamotables et d'un timon démontable pour permettre à un véhicule de le remorquer ;
- la figure 2 montre l'engin en mode navigation avec ses passages de roues fermés par des volets mobiles ;

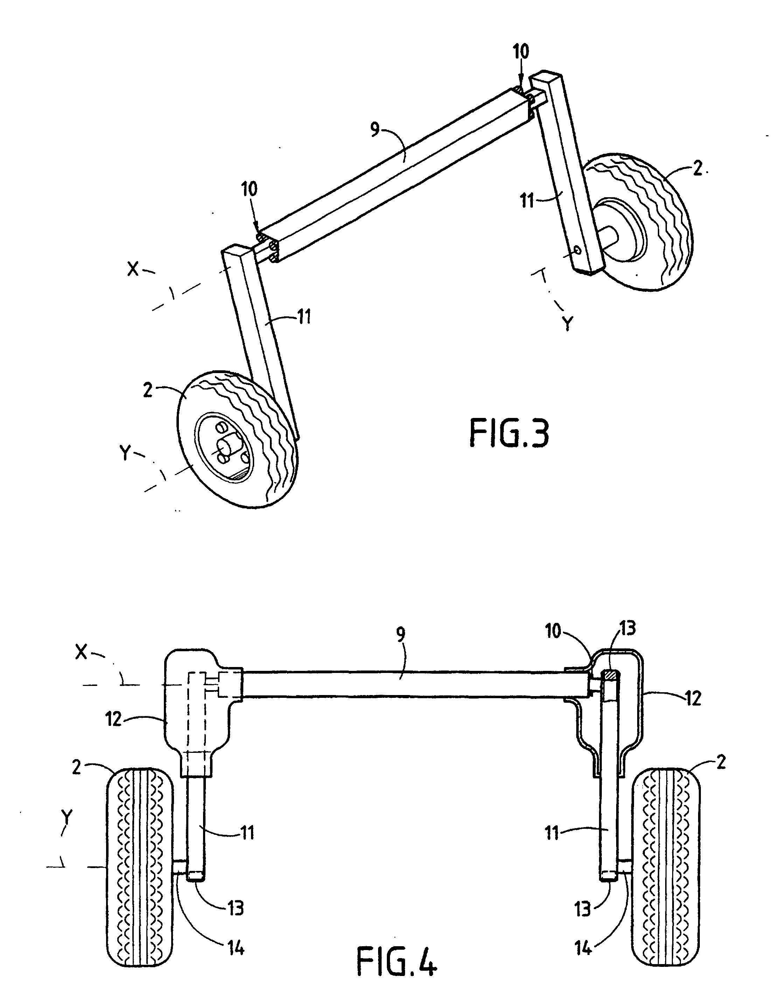

- la figure 3 montre le type d'essieu avec bras de suspension à amortisseurs en caoutchouc utilisé pour supporter l'engin ;
- la figure 4 montre pour partie en coupe les moyens mis en oeuvre pour protéger l'essieu et tout particulièrement les amortisseurs en caoutchouc contre la corrosion ;
- la figure 5 montre pour partie en coupe les moyens mis en oeuvre pour renforcer la protection des moyeux des roues contre la pénétration d'eau et de sable ;
- la figure 6 présente en perspective latérale l'ensemble de l'essieu avec ses paliers et avec son bras de levier pour la commande de la rotation de l'essieu vers la position de roulage ou vers la position de navigation selon un premier mode de réalisation ;
- la figure 7 présente un deuxième mode de réalisation du dispositif de manoeuvre de la rotation de l'essieu ;
- la figure 8 présente un mode de réalisation des paliers en deux demi coquilles rapportées sur l'essieu ;
- la figure 9 est une vue latérale de l'essieu équipé d'un bras de levier de commande selon le premier mode de réalisation en position de roulage ;
- la figure 10 est une vue latérale du même essieu équipé d'un bras levier à commande manuelle en position de navigation ;
- la figure 11 est une vue latérale en position de roulage de l'essieu équipé d'un mécanisme de commande à vis/écrou selon le deuxième mode de réalisation ;
- la figure 12 est une vue latérale, en position de navigation, du même essieu équipé d'un mécanisme de commande selon le deuxième mode de réalisation ;
- la figure 13 montre en coupe comment l'essieu est implanté dans un évidement pratiqué sous la coque dans une variante avec un mécanisme constitué par un simple levier rendu accessible par un puits pratiqué dans la coque, le profil de carène présenté étant du type V ;
- la figure 14 montre également en coupe une autre variante avec un mécanisme placé latéralement dans un des logements prévus pour accueillir les roues, le profil de carène présenté étant du type catamaran;
- la figure 15 montre en coupe latérale, selon la ligne XV de la figure 14, le fond de coque illustré en figure 16 avec l'évidement accueillant la partie centrale de l'essieu et la pièce servant à l'obstruer pour ne pas modifier les performances de la carène ; et
- la figure 16 présente en perspective l'arrière de la coque retournée dans une variante dans laquelle les demi paliers côté coque sont directement issus du moulage de celle-ci.

L'ensemble représenté sur les dessins comprend une coque 1 de bateau, susceptible de flotter et de rouler sur la route, cette coque 1 étant équipée de roues escamotables 2 et d'un timon démontable 3.

En mode navigation les ouvertures 4 de cavités ménagées dans la coque 1 et permettant le passage des roues 2, sont fermées par des volets 5.

Cette coque 1 est équipée d'un essieu 9 à amortisseurs en caoutchouc 10, équipé de deux bras de suspension 11 supportant les roues 2 de l'engin.

Les amortisseurs 10 sont protégés contre la corrosion au moyen de manchons souples 12 ajustés de façon étanche sur l'essieu 9 et les bras de suspension 11 et destinés à empêcher l'eau de pénétrer dans les amortisseurs en caoutchouc. En outre, dans le cas où les bras de suspension 11 sont creux, les orifices de ces bras sont obturés par des bouchons 13.

Les deux bras de suspension 11 sont sensiblement parallèles entre eux et ils peuvent osciller individuellement autour de l'axe X défini par l'essieu 9 grâce aux amortisseurs en caoutchouc 10.

Les roues 2 sont montées sur des arbres de support 14 solidaires des bras de suspension 11 et dont les axes Y sont parallèles à l'axe X et excentrés par rapport à cet axe X.

Les moyeux 17 des roues 2 sont également protégés contre l'eau et le sable par l'ajustement étanche sur leurs arbres de support 14 d'une bague lisse 15 en métal inoxydable et d'un joint à lèvre 16 garni de graisse et solidaire du moyeu 17 ou du flasque de roue entraîné en rotation par la roue 2.

L'essieu 9 est fixé à la coque 1 par deux paliers 21 permettant de le faire pivoter à l'aide d'un bras de levier 22 solidaire de la partie centrale de l'essieu 9, ce bras de levier 22 servant également à maintenir ensuite l'essieu 9 dans l'une des positions souhaitées de roulage ou de navigation.

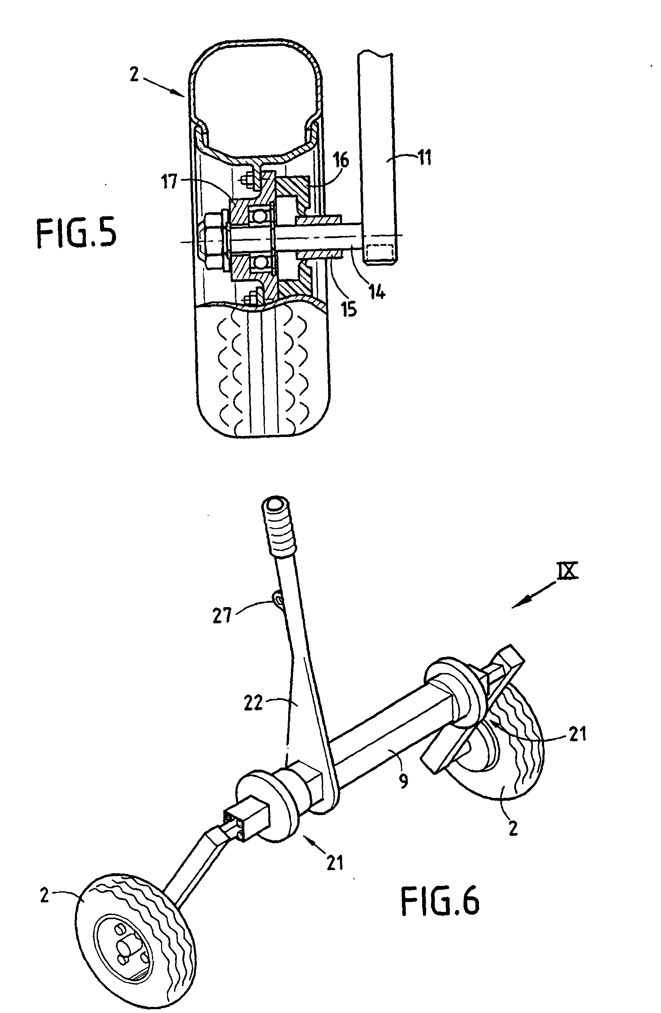

Selon un premier mode de réalisation montré sur les figures 6, 9, 10 et 13, le bras de levier 22 est manoeuvrable manuellement et il peut être immobilisé par rapport à la coque 1 dans l'une ou l'autre des positions de roulage ou de navigation au moyen d'une goupille ou d'une tige solidaire de la coque 1 de l'engin et traversant un perçage 27 formé dans le bras de levier 22. L'extrémité libre du bras de levier 22 comporte dans ce cas une poignée de préhension qui est accessible de l'intérieur de la coque 1.

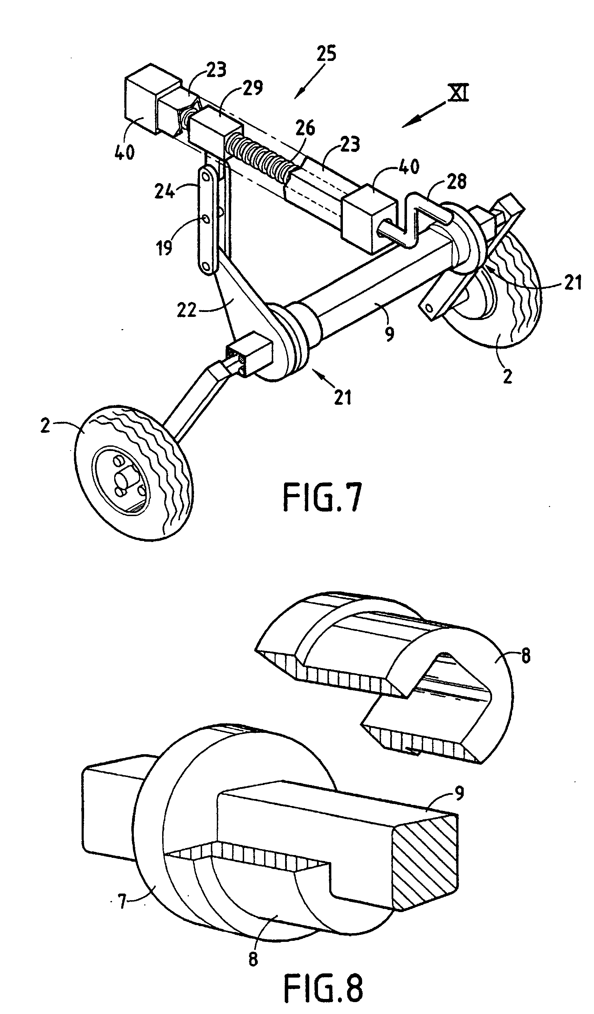

Selon un deuxième mode de réalisation, montré sur les figures 7, 11, 12 et 14, le bras de levier 22 est actionné par un mécanisme 25. Ce mécanisme 25 comporte une vis sans fin 26 disposée dans l'axe de la coque 1 et montée rotative sur la coque 1 au moyen de deux paliers 40 et qui peut être tournée au moyen d'une manivelle 28. Sur cette vis sans fin 26 est prévu un écrou 29 qui se déplace dans une cage ouverte 23 solidaire de la coque 1 le long de la vis sans fin 26 par suite de la rotation de la manivelle 28. Une bielle 24 est articulée, d'une part, sur l'écrou 29 et, d'autre part, sur l'extrémité libre du bras de levier 22.

De préférence, le mécanisme 25 est disposé au-dessus du niveau 6 correspondant à la ligne de flottaison de l'engin quand celui-ci flotte, et la manivelle 28 est de préférence accessible de l'intérieur de la coque 1.

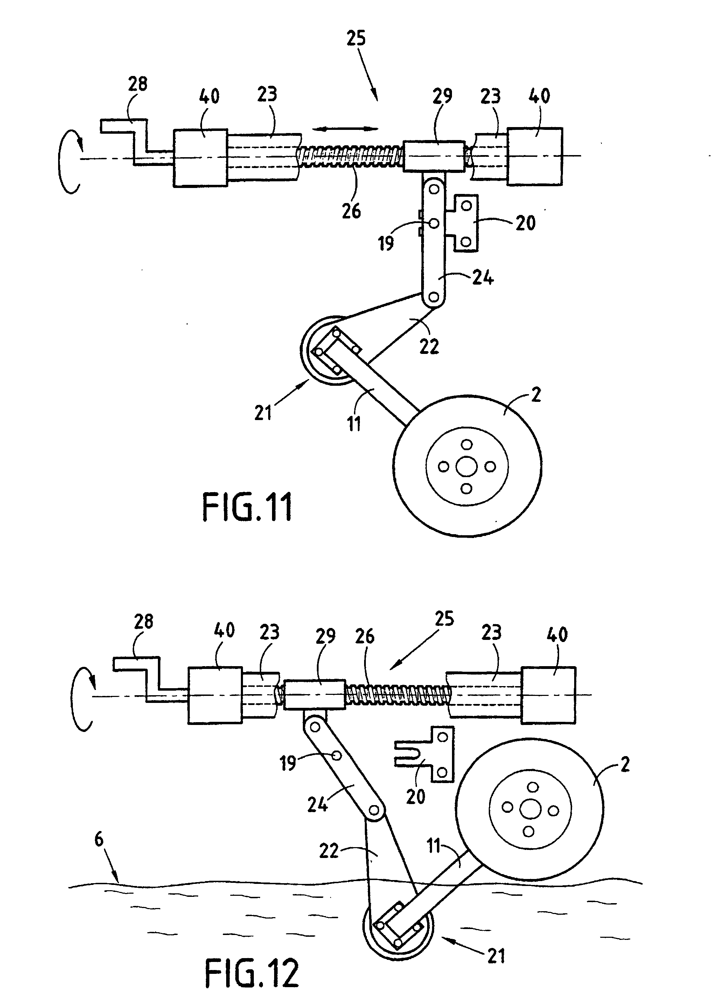

Le positionnement du mécanisme 25 est calculé pour qu'en position de roulage (figure 11) l'angle entre la bielle 24 et l'axe de la vis sans fin 26 soit pratiquement droit afin de n'exercer sur la vis aucun effort dans le sens de son axe et d'obtenir ainsi un effet induit de verrouillage empêchant les roues 2 de remonter lors du roulage de l'engin.

Pour soulager le mécanisme 25, il est également prévu qu'en fin de course, en position de roulage, la bielle 24 vienne s'encastrer au moyen d'un axe 19 dans une fourchette 20 fermement solidaire de la coque 1 afin de reprendre les efforts de rotation de l'essieu directement sur cette coque 1.

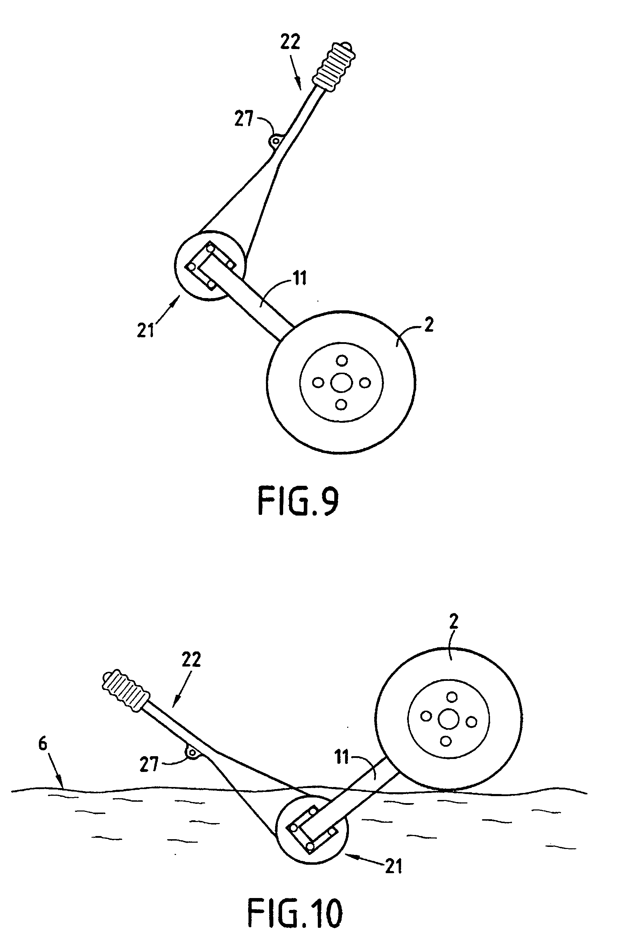

La figure 8 montre un variante de réalisation du palier 21 avec une pièce de maintien latéral 7 solidaire de l'essieu 9 et deux demi coquilles 8 pouvant être réalisées en matériau non métallique tel qu'un matériau polymère afin d'éviter bruit et corrosion dans les paliers.

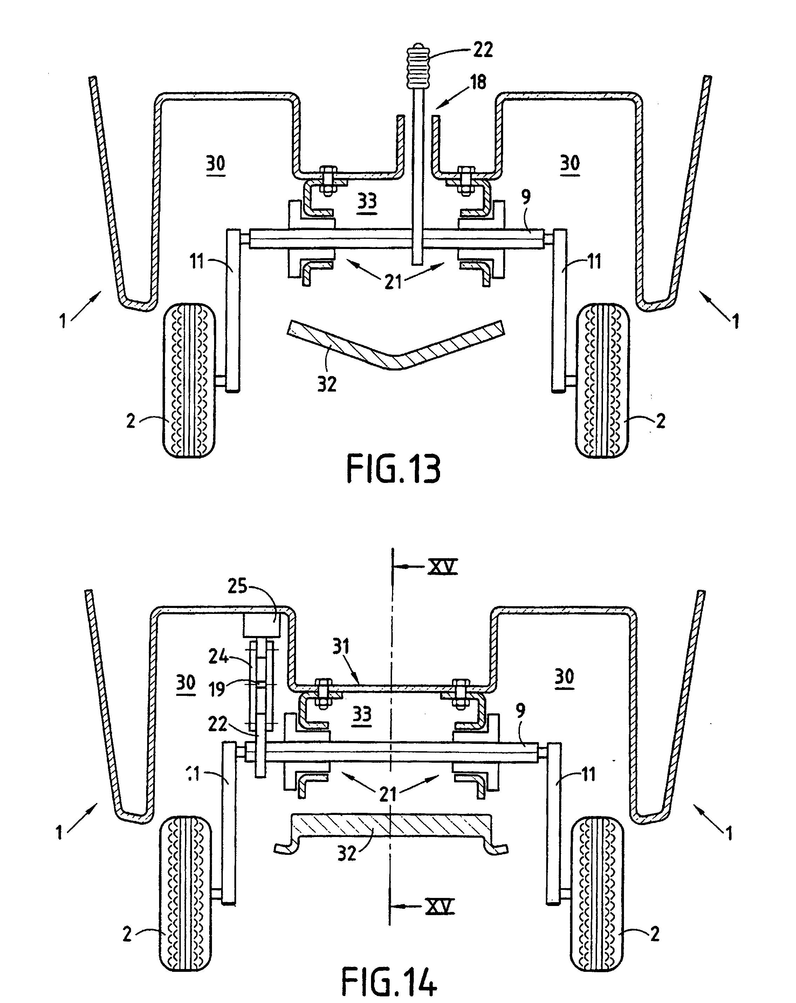

La figure 13 montre une coque 1 de section en V dans laquelle l'essieu 9 est fixé dans un évidement 33 pratiqué sous la coque 1 au moyen de deux paliers 21. Ici, le mécanisme de pivotement de l'essieu 9 est constitué d'un simple levier 22 rendu accessible de l'intérieur de la coque par un puits 18. Les références 30 représentent des cavités ménagées dans la coque 1 et débouchant dans la face inférieure de la coque 1, et dans lesquelles les roues 2 logent lorsqu'on met l'essieu 9 dans la position de navigation.

Après fixation de l'essieu 9, une pièce complémentaire 32 peut refermer l'évidement 33 pour préserver les performances de la carène.

La figure 14 montre une coque 1 de type catamaran dans laquelle les cavités 30 sont ménagées dans les flotteurs latéraux. Ici, l'essieu 9 est fixé dans un évidement 33 sous la paroi 31 reliant les flotteurs de la coque 1, au moyen de paliers 21.

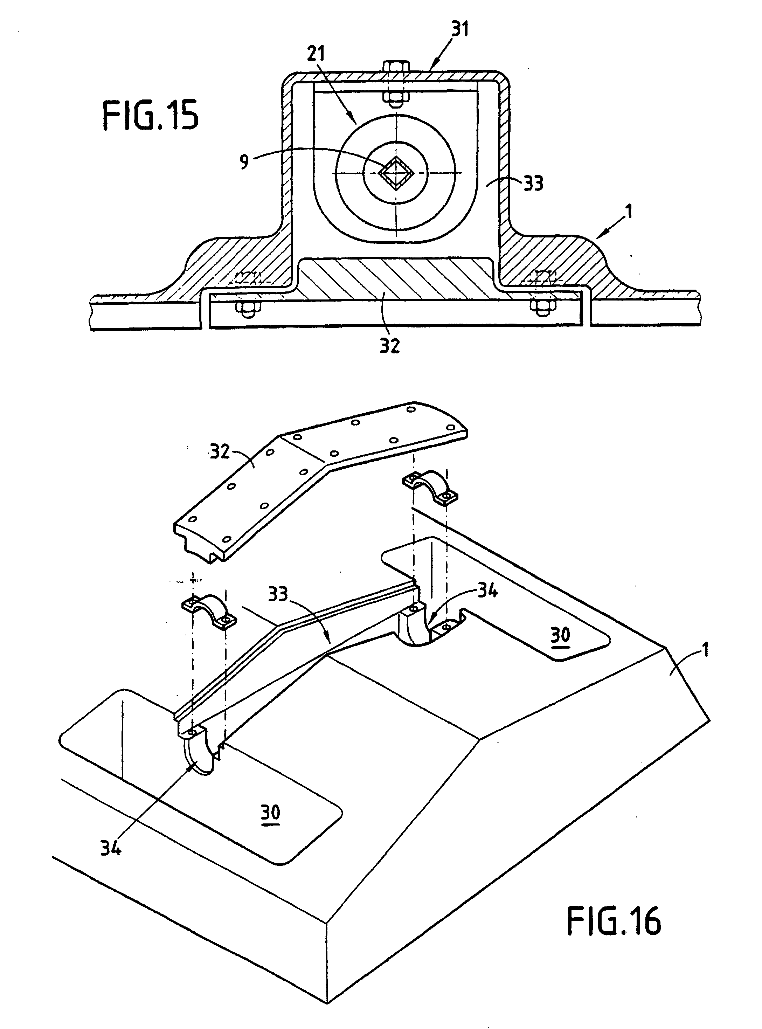

La figure 15 montre en coupe latérale comment cet évidement 33 servant à accueillir la partie centrale de l'essieu sous la coque peut être obstrué par la pièce 32.

En position de navigation, les roues 2 logent dans les cavités 30, de préférence au-dessus de la ligne de flottaison 6, mais ces cavités 30, qui peuvent éventuellement être obturées par des volets mobiles pour préserver les performances de la carène, n'ont pas besoin d'être étanches à l'eau.

La figure 16 montre en perspective l'arrière d'une coque retournée avec carène en V présentant les passages de roues 30, le logement 33 prévu pour accueillir l'essieu et la pièce 32 permettant de le refermer pour préserver les performances de la carène ; dans cette variante, les supports de palier 34 côté coque sont directement issus des opérations de moulage de celle-ci.

## Revendications

1. Engin comprenant une coque (1) susceptible de flotter sur un plan d'eau et équipée à demeure d'un essieu (9) transversal rigide présentant à ses extrémités des bras de suspension (11) sensiblement parallèles sur lesquels sont montés des roues (2) ayant des axes Y de rotation excentrés par rapport à l'axe X défini par l'essieu, lesdits bras (11) étant montés de manière oscillante sur l'essieu (9), ledit essieu (9) étant monté de manière rotative sur ladite coque (1) pour pouvoir pivoter entre deux positions extrêmes, une première position, dite de roulage, dans laquelle les bras (11) s'étendent vers le bas afin de permettre le roulage de l'engin sur le sol et une deuxième position, dite de navigation, dans laquelle les bras (11) sont relevés et logent avec leurs roues (2) dans des cavités (30) ménagées dans la coque (1), des moyens étant prévus pour manoeuvrer et immobiliser l'essieu (9) dans l'une ou l'autre desdites positions extrêmes,
**caractérisé par le fait que** l'essieu (9) est monté dans un évidement (33) ménagé sous la coque (1) et maintenu au moyen de deux paliers (21) non étanches, cet évidement pouvant être obturé par une pièce complémentaire (32), et l'essieu étant équipé d'un bras de levier (22) pour permettre son pivotement.

2. Engin selon la revendication 1, **caractérisé par le fait que** les bras (11) sont montés de manière oscillante sur l'essieu (9) avec interposition d'amortisseurs (10) en caoutchouc.

3. Engin selon l'une des revendications 1 ou 2, **caractérisé par le fait qu'**il est prévu des moyens (27) coopérant avec la coque (1) et le bras de levier (22) pour immobiliser ce dernier ainsi que l'essieu (9) dans la position de roulage et dans la position de navigation de l'essieu (9).

4. Engin selon l'une des revendications 1 à 3, **caractérisé par le fait qu'**il est prévu un mécanisme (25) pour faire pivoter l'essieu (9).

5. Engin selon la revendication 4, **caractérisé par le fait que** le mécanisme (25) comporte une vis sans fin (26) montée rotative sur la coque (1) au moyen de paliers (40), un écrou (29) susceptible de se déplacer à l'intérieur d'une cage ouverte (23) sur ladite vis (26) par rotation de cette dernière, une bielle (24) articulée sur l'écrou (29) et sur l'extrémité libre du bras de levier (22) et des moyens (28) pour faire tourner la vis (26).

6. Engin selon l'une quelconque des revendications 4 ou 5, **caractérisé par le fait que** dans la position de roulage, la bielle (22) est sensiblement perpendiculaire à la vis (26), et est immobilisée par une goupille (19) venant s'engager dans une fourchette (20) solidaire de la coque (1).

7. Engin selon l'une quelconque des revendications 1 à 6, **caractérisé par le fait que** la partie (8) des paliers (21) qui pivote avec l'essieu (9) est réalisée en un matériau non métallique tel qu'un matériau polymère.

8. Engin selon l'une quelconque des revendications 1 à 7, **caractérisé par le fait que** la partie (34) des paliers (21) solidaire de la coque (1) est directement issue des opérations de moulage de celle-ci.

9. Engin selon la revendication 2, **caractérisé par le fait que** les amortisseurs (10) en caoutchouc sont protégés par des manchons (12) élastiques ajustés de manière étanche entre l'essieu (9) et les bras de suspension (11).

10. Engin selon l'une quelconque des revendications 1 à 7, dans lequel les roues (2) comportent des moyeux (17) pour leur montage sur des arbres (14) solidaires des bras de suspension (11), **caractérisé par le fait que** les moyeux (17) sont protégés contre l'eau par des bagues (15) lisses en métal inoxydable, montées de façon étanche sur les arbres (14) et coopérant avec des joints à lèvre (16) montés sur les moyeux (17) des roues (2).

## Patentansprüche

1. Fahrzeug, das einen Schiffsrumpf (1) umfasst, der auf einer Wasseroberfläche schwimmen kann und mit einer fest damit verbundenen starren transversalen Fahrzeugachse (9) ausgestattet ist, die an ihren Enden Querlenker (11) aufweist, die im wesentlichen parallel zueinander verlaufen und an denen Räder (2) montiert sind, die Drehachsen Y aufweisen, die exzentrisch sind zu der durch die Fahrzeugachse definierten Achse X, wobei die genannten Querlenker (11) verschwenkbar an der Fahrzeugachse (9) befestigt sind, die drehbar an dem Schiffsrumpf (1) so montiert ist, dass sie zwischen zwei Endpositionen verschwenkt werden kann, einer ersten, so genannten Roll-Position, in der die Querlenker (11) sich nach unten erstrecken, sodass das Fahrzeug auf dem Erdboden rollen kann, und einer zweiten, so genannten Schwimmposition, in der die Querlenker (11) angehoben sind und zusammen mit ihren Rädern (2) in Hohlräumen (30) vorliegen, die in dem Schiffsrumpf (1) vorgesehen sind, wobei außerdem Einrichtungen vorgesehen sind, um die Fahrzeugachse (9) in die eine oder die andere der genannten Endpositionen zu bringen und zu arretieren,
**dadurch gekennzeichnet, dass** die Fahrzeugachse (9) in einer unter dem Schiffsrumpf (1) vorgesehenen Mulde (33) montiert ist und mittels zwei nicht abgedichteten Lagern (21) darin gehalten wird, wobei diese Mulde durch ein komplementäres Element (32) abdichtend verschlossen werden kann und die Fahrzeugachse mit einem Hebelarm (22) ausgestattet ist, der ihre Verschwenkung ermöglicht.

2. Fahrzeug nach Anspruch 1, **dadurch gekennzeichnet, dass** die Querlenker (11) verschwenkbar an der Fahrzeugachse (9) mit dazwischen angeordneten Kautschuk-Stoßdämpfern (10) montiert sind.

3. Fahrzeug nach einem der Ansprüche 1 oder 2, **dadurch gekennzeichnet, dass** daran Einrichtungen (27) vorgesehen sind, die mit dem Schiffsrumpf (1) und dem Hebelarm (22) kooperieren, um letzteren sowie die Fahrzeugachse (9) in der Roll-Position und in der Schwimm-Position zu arretieren.

4. Fahrzeug nach einem der Ansprüche 1 bis 3, **dadurch gekennzeichnet, dass** ein Mechanismus (25) vorgesehen ist, um die Fahrzeugachse (9) verschwenkbar zu machen.

5. Fahrzeug nach Anspruch 4, **dadurch gekennzeichnet, dass** der Mechanismus (25) umfasst eine Schnecke (26), die mittels Lagern (40) an dem Schiffsrumpf (1) drehbar befestigt ist, eine Schraubmutter (29), die im Innern eines offenen Gehäuses (23) auf der Schnecke (26) durch Drehen derselben verschiebbar angeordnet ist, ein an der Schraubmutter (29) und an dem freien Ende des Hebelarms (22) angelenktes Zwischenglied (24) und Einrichtungen (28), um die Schnecke (26) zu drehen.

6. Fahrzeug nach einem der Ansprüche 4 oder 5, **dadurch gekennzeichnet, dass** in der Roll-Position das Zwischenglied (22) im wesentlichen senkrecht zur Schnecke (26) verläuft und mittels eines Stiftes (19) fixiert ist, der in eine mit dem Schiffsrumpf (1) fest verbundene Gabel eingreift.

7. Fahrzeug nach einem der Ansprüche 1 bis 6, **dadurch gekennzeichnet, dass** der Teil (8) der Lager (21), der mit der Fahrzeugachse (9) verschwenkt wird, aus einem nicht-metallischen Material, beispielsweise einem Polymermaterial, hergestellt ist.

8. Fahrzeug nach einem der Ansprüche 1 bis 7, **dadurch gekennzeichnet, dass** der Teil (34) der Lager (21), der mit dem Schiffsrumpf (1) fest verbunden ist, direkt an letzteren angeformt ist.

9. Fahrzeug nach Anspruch 2, **dadurch gekennzeichnet, dass** die Kautschuk-Stoßdämpfer (10) durch elastische Manschetten (12) geschützt sind, die so eingestellt sind, dass sie eine Abdichtung zwischen der Fahrzeugachse (9) und den Querlenkern (11) bewirken.

10. Fahrzeug nach einem der Ansprüche 1 bis 7, bei dem die Räder (2) Naben (17) aufweisen, um sie an Wellen (14), die mit Querlenkern (11) fest verbunden sind, montieren zu können, **dadurch gekennzeichnet, dass** die Naben (17) gegen das Eindringen von Wasser durch glatte Ringe (15) aus einem nicht oxidierbaren Metall geschützt sind, die abdichtend auf den Wellen (14) montiert sind und mit Lippendichtungen (16) kooperieren, die auf den Naben (17) der Räder (2) montiert sind.

## Claims

1. A vessel comprising a hull (1) suitable for floating on water and permanently fitted with a rigid transverse axle (9) having substantially parallel suspension arms (11) at its ends, which arms carry wheels (2) having axes of rotation (Y) that are offset from the axis (X) defined by the axle, said arms (11) being mounted in oscillating manner on the axle (9), said axle (9) being mounted in pivotal manner on said hull (1) to be capable of pivoting between two extreme positions, namely a "running", first position in which the arms (11) extend downwards so as to enable the vessel to run on the ground, and a "sailing" second position in which the arms (11) are raised and received together with their wheels (2) in cavities (30) formed in the hull (1), means being provided for moving the axle (9) into one or other of said extreme positions and for locking it therein,
the vessel being **characterised by** the fact that the axle (9) is mounted in a recess (33) formed beneath the hull (1) and is held therein by means of two non-leakproof bearings (21), said recess being capable of being closed by a complementary piece (32), and the axle being fitted with a lever arm (22) to enable it to be pivoted.

2. A vessel according to claim 1, **characterised by** the fact that the arms (11) are mounted in oscillating manner on the axle (9) by means of interposed rubber dampers (10).

3. A vessel according to claim 1 or 2, **characterised by** the fact that means (27) are provided that co-operate with the hull (1) and the lever arm (22) to lock the lever arm together with the hull (9) both in the running position and in the sailing position of the axle (9).

4. A vessel according to one of claims 1 to 3, **characterised by** the fact that a mechanism (25) is provided to pivot the axle (9).

5. A vessel according to claim 4, **characterised by** the fact that the mechanism (25) comprises a wormscrew (26) rotatably mounted on the hull (1) by means of bearings (40), a nut (29) suitable for being moved along said screw (26) inside an open cage (23) by rotation of the screw, a link (24) hinged to the nut (29) and to the free end of the lever arm (22), and means (28) for rotating the screw (26).

6. A vessel according to claim 4 or 5, **characterised by** the fact that, in the running position, the link (22) is substantially perpendicular to the screw (26), and is locked by means of a pin (19) engaging in a fork (20) secured to the hull (1).

7. A vessel according to any one of claims 1 to 6, **characterised by** the fact that the portion (8) of the bearings (21) that pivot with the axle (9) is made of a non-metallic material such as a polymer material.

8. A vessel according to any one of claims 1 to 7, **characterised by** the fact that the portion (34) of the bearings (21) that is secured to the hull (1) is integrally moulded therewith.

9. A vessel according to claim 2, **characterised by** the fact that the rubber dampers (10) are protected by elastic sleeves (12) fitted in leakproof manner to extend between the axle (9) and each of the suspension arms (11).

10. A vessel according to any one of claims 1 to 7, in which the wheels (2) have hubs (17) for mounting on shafts (14) secured to the suspension arms (11), the vessel being **characterised by** the fact that the hubs (17) are protected against water by smooth rings (15) of stainless metal that are mounted on the shafts (14) in leakproof manner and that co-operate with lip gaskets (16) mounted on the hubs (17) of the wheels (2).
